# EUROPÄISCHE PATENTSCHRIFT

(11) **EP 0 462 435 B1**
(45) Veröffentlichungstag und Bekanntmachung des Hinweises auf die Patenterteilung: **27.07.1994**
(21) Anmeldenummer: 91108942.3
(22) Anmeldetag: 31.05.1991
(51) Int. Cl.: G01P 3/488

(54) **Anordnung zur Erfassung der Drehzahl eines rotierenden Bauteils**
System for detecting the rotational speed of a rotating component
Arrangement pour détecter la vitesse de rotation d'une pièce en rotation

(30) Priorität: 13.06.1990 DE 4018879
(43) Veröffentlichungstag der Anmeldung: 27.12.1991
(73) Patentinhaber: Volkswagen Aktiengesellschaft, 38436 Wolfsburg (DE)
(72) Erfinder: Prüss, Ludwig, Dipl.-Ing., W-3300 Braunschweig (DE); Ott, Bernhard, Dipl.-Ing., W-3302 Cremlingen 7 (DE); Preine, Gerhard, W-3300 Braunschweig (DE); Kappel, Reinhard, W-3180 Wolfsburg (DE); Gloger, Jürgen, Dipl.-Ing., W-3170 Gifhorn (DE)

(56) Entgegenhaltungen:
- EP-A- 0 273 129
- DE-A- 3 620 884
- FR-A- 2 350 605
- US-A- 4 056 747

## Beschreibung

Die Erfindung betrifft eine Anordnung zur Erfassung der Drehzahl eines im Betrieb rotierenden Bauteils gemäß dem ersten Teil des Patentanspruchs 1.

Aus der US-A-4 056 747 ist eine gattungsgemäße Anordnung bekannt, bei der ein Magnetfelderzeugungsmittel und ein Magnetfelddetektormittel zu einer Baueinheit zusammengefaßt und auf der Außenwand eines feststehenden Gehäuses befestigt sind. Mit dieser Anordnung ist durch die Außenwand hindurch die Drehzahl eines innerhalb des feststehenden Gehäuses rotierenden Bauteils erfaßbar.

Auch bei einer Anordnung gemäß der US-A-4 439 728 wird die Drehzahl des rotierenden Bauteiles durch eine feststehende Wandung hindurch ermittelt. Die dort beschriebene Drehzahlsensoreinrichtung ist zweiteilig ausgebildet und weist im wesentlichen einen Permanentmagneten zur Erzeugung eines bestimmten Magnetfeldes sowie ein von dem Permanentmagneten beabstandetes, gesondertes Magnetfelddetektormittel auf. Diese Drehzahlsensoreinrichtung ist sehr bauraumaufwendig und überdies umständlich montierbar.

Vor diesem Hintergrund liegt der Erfindung die Aufgabe zugrunde, ausgehend von gattungsgemäßen Anordnungen eine Messung durch eine rotierende Wand zu ermöglichen.

Diese Aufgabe wird gelöst durch die Merkmale des Patentanspruchs 1. Die abhängigen Ansprüche enthalten zweckmäßige Weiterbildungen der Erfindung und betreffen darüber hinaus bevorzugte Einsatzgebiete für die erfindungsgemäße Drehzahlsensoreinrichtung.

Der besondere Vorteil der erfindungsgemäßen Anordnung ist darin zu sehen, daß sie ohne großen Aufwand an bereits bestehenden Maschinen oder Aggregaten mit rotierenden Bauteilen nachgerüstet werden kann.

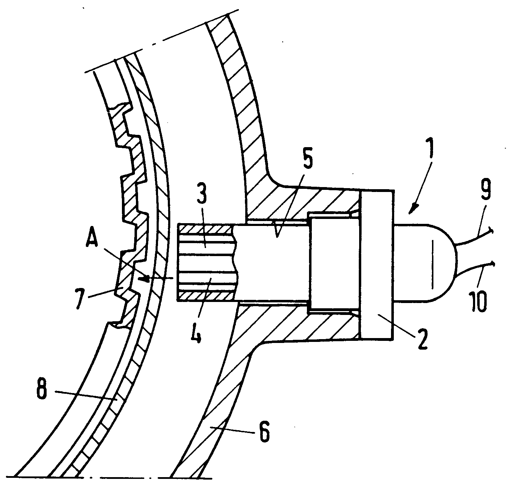

In der Zeichnung ist eine bevorzugte Anwendungsmöglichkeit der Erfindung dargestellt. Man erkennt eine insgesamt mit 1 bezeichnete Drehzahlsensoreinrichtung, in der innerhalb eines vorzugsweise aus spritzfähigem Kunststoff hergestellten Gehäuses 2 ein als Magnetfelderzeugungsmittel arbeitender Permanentmagnet 3 und ein hier nach dem Feldplattenprinzip arbeitendes Magnetfelddetektormittel 4 angeordnet sind. Die hier steckbare Drehzahlsensoreinrichtung 1 befindet sich in einer Bohrung 5 eines nur ausschnittsweise dargestellten Getriebegehäuses 6, in dem Bauelemente eines nicht weiter dargestellten Kraftfahrzeug-Automatikgetriebes angeordnet sind. Zu diesen Bauelementen gehört eine außenverzahnte erste Kupplungsglocke 7 sowie eine zumindest in einem der Drehzahlsensoreinrichtung 1 gegenüberliegenden Bereich in Umfangsrichtung weitestgehend ebene, zweite Kupplungsglocke 8, die zwischen der Drehzahlsensoreinrichtung 1 und der ersten Kupplungsglocke 7 angeordnet ist. Mittels Signalübertragungsleitungen 9 und 10 werden die von der Drehzahlsensoreinrichtung 1 erfaßten Signale einer in der Zeichnung nicht weiter dargestellten elektronischen Auswerteeinheit zugeführt.

Gemäß der Erfindung ist das Magnetfelddetektormittel 4 in Pfeilrichtung A, also in einer durch seinen kürzesten Abstand zur Kupplungsglocke 7 bestimmten Richtung besonders empfindlich. Auf diese Weise ist es möglich, auch durch die sich drehende zweite Kupplungsglocke 8 hindurch die von der ersten Kupplungsglocke 7 bewirkte Veränderung des vom Permanentmagneten 3 erzeugten Magnetfeldes zu erfassen. Gute Resultate wurden für Anordnungen erzielt, bei denen der Grundwerkstoff der zweiten Kupplungsglocke 8 zumindest abschnittsweise in einem dem Magnetfelddetektormittel 4 gegenüberliegenden Bereich in Umfangsrichtung entmagnetisiert war oder aber mit einer ein gerichtetes Magnetfeld erzeugenden Magnetisierung versehen wurde. Dies ist insbesondere dann der Fall, wenn die aus eigentlich nicht magnetisierbaren Werkstoff gehaltene Kupplungsglocke während des Herstellungsprozesses beim Tiefziehen in Stahlwerkzeugen einen ungerichteten und daher störenden Restmagnetismus erhält.

Besonders interessant ist der Einsatz der erfindungsmäßen Drehzahlsensoreinrichtung 1 in mit einem Strömungswandler verbundenen Kraftfahrzeug-Automatikgetrieben. Insbesondere bei quer zur Fahrtrichtung eingebauten Automatikgetrieben wird häufig eine kompakte Bauweise gefordert, die dazu führt, daß einzelne Schaltglieder innerhalb des Automatikgetriebes verschachtelt ineinander angeordnet werden müssen. So kann es vorkommen, daß für Regelungszwecke beispielsweise die Drehzahl einer Kupplungsglocke ermittelt werden muß, die innerhalb einer weiteren ebenfalls rotierenden Kupplungsglocke angeordnet ist und hat darüber hinaus eine drehfeste Verbindung zum Turbinenrad des Strömungswandlers aufweist. Für eine solche Einbausituation war es bislang mit den bekannten Drehzahlsensoreinrichtungen nicht möglich, die Drehzahl eines mit Bezug auf die Drehzahlsensoreinrichtung hinter einem ebenfalls rotierenden Bauteil angeordneten Bauteils zu bestimmen. Für diesen Verwendungszweck sind die nach dem Feldplattenprinzip arbeitenden Magnetfelddetektormittel sehr vorteilhaft, weil durch diese der Stillstand des Turbinenrades eindeutig feststellbar ist.

## Patentansprüche

1. Anordnung zur Drehzahlerfassung mit
- einem im Betrieb rotierenden Bauteil (7), das in Umfangsrichtung wenigstens eine Unebenheit aufweist,
- einer die Bewegung der Unebenheit erfassenden Drehzahlsensoreinrichtung (1), bei der ein Magnetfelderzeugungsmittel (3) und ein Magnetfelddetektormittel (4) zu einer Baueinheit zusammengefaßt sind,
- einer Wandung (8), die zwischen der Drehzahlsensoreinrichtung (1) und dem rotierenden Bauteil (7) derart angeordnet ist, daß die Drehzahl des rotierenden Bauteils (7) durch die Wandung (8) hindurch erfaßbar ist,
dadurch gekennzeichnet, daß
- die Wandung (8) im Betrieb ebenfalls rotierend ist,
- das Magnetfelddetektormittel (4) in einer durch dessen kürzesten Abstand zum rotierenden Bauteil (7) bestimmten Richtung besonders empfindlich ist,
- der Grundwerkstoff der Wandung (8) zumindest in einem dem Magnetfelddetektormittel (4) gegenüberliegenden Bereich in Umfangsrichtung entmagnetisiert ist oder eine ein gerichtetes Magnetfeld erzeugende Magnetisierung aufweist.

2. Anordnung nach Anspruch 1, dadurch gekennzeichnet, daß die Baueinheit in eine Bohrung (5) eines Gehäuses (6) steckbar ist.

3. Anordnung nach Anspruch 1 oder 2, dadurch gekennzeichnet, daß das rotierende Bauteil eine außenverzahnte Kupplungsglocke (7) ist, die innerhalb eines die rotierende Wandung bildenden hohlzylindrischen Elementes (8) angeordnet ist.

4. Anordnung nach Anspruch 3, dadurch gekennzeichnet, daß das hohlzylindrische Element (8) zumindest in einem der Drehzahlsensoreinrichtung (1) gegenüberliegenden Bereich in Umfangsrichtung weitgehend eben ist.

5. Anordnung nach wenigstens einem der Ansprüche 3 oder 4, dadurch gekennzeichnet, daß die außenverzahnte Kupplungsglocke (7) und das hohlzylindrische Element (8) Schaltglieder eines mit einem Strömungswandler verbundenen Kraftfahrzeug-Automatikgetriebes sind.

6. Anordnung nach Anspruch 5, dadurch gekennzeichnet, daß ein mit dem Kraftfahrzeug-Automatikgetriebe verbundenes Turbinenrad des Strömungswandlers mit der außenverzahnten Kupplungsglocke (7) verbunden ist.

7. Anordnung nach wenigstens einem der Ansprüche 1 bis 6, dadurch gekennzeichnet, daß das Magnetfelddetektormittel (4) ein nach dem Feldplattenprinzip arbeitender Sensor ist.

8. Anordnung nach Anspruch 7, dadurch gekennzeichnet, daß durch den Sensor ein den Stillstand des an sich rotierenden Bauteils anzeigendes Signal erzeugbar ist.

## Claims

1. A system for detecting rotational speed having
- a component (7) which rotates during operation and, in the peripheral direction, comprises at least one unevenness,
- a rotational speed sensor device (1) detecting the movement of the unevenness, in which a means (3) for creating a magnetic field and a means (4) for detecting a magnetic field are combined in one component part,
- a wall (8) which is disposed between the rotational speed sensor device (1) and the rotating component (7) in such a way that the rotational speed of the rotating component (7) is detectable through the wall (8),
characterised in that
- the wall (8) is likewise rotating during operation,
- the magnetic field detector means (4) is particularly sensitive in one direction predetermined by its shortest spacing from the rotating component (7),
- the basic material of the wall (8) at least in a region lying opposite to the magnetic field detector means (4) is demagnetised in the peripheral direction or comprises a magnetisation producing a directed magnetic field.

2. A system according to claim 1, characterised in that the constructional unit can be plugged into a bore (5) of a housing (6).

3. A system according to claim 1 or 2, characterised in that the rotating component is an outwardly toothed coupling cage (7) which is disposed inside a hollow-cylindrical element (8) forming the rotating wall.

4. A system according to claim 3 characterised in that the hollow-cylindrical element (8) is substantially level in the peripheral direction at least in a region lying opposite the rotational speed sensor device (1).

5. A system according to at least one of the claims 3 or 4, characterised in that the outwardly toothed coupling cage (7) and the hollow-cylindrical element (8) are connecting members of a motor vehicle automatic transmission connected to a current transformer.

6. A system according to claim 5, characterised in that a turbine wheel of the current transformer, which turbine wheel is connected to the motor vehicle automatic transmission, is connected to the outwardly toothed coupling cage (7).

7. A system according to at least one of the claims 1 to 6, characterised in that the magnetic field detector means (4) is a sensor working according to the principle of magnetically controlled semiconductor resistance.

8. A system according to claim 7, characterised in that by means of the sensor a signal can be produced indicating that the component which is normally rotating is at a standstill.

## Revendications

1. Dispositif de détection d'une vitesse de rotation, comprenant
- un composant qui est rotatif en service (7) et comprenant au moins une inégalité dans la direction de la circonférence,
- un dispositif (1) de détection de la vitesse de rotation qui détecte le mouvement de l'inégalité et dans lequel sont réunis en un module un moyen (3) de génération d'un champ magnétique et un élément (4) de détection d'un champ magnétique,
- une cloison (8) qui est disposée entre le dispositif (1) de détection de la vitesse de rotation et le composant rotatif (7) de manière que la vitesse de rotation du composant rotatif (7) puisse être décelée à travers la cloison (8),
caractérisé en ce que
- la cloison (8) est également rotative en service,
- l'élément (4) de détection du champ magnétique est spécialement sensible dans une direction déterminée par sa plus faible distance au composant rotatif (7),
- le matériau de base de la cloison (8) est au moins démagnétisé dans la direction de la circonférence dans une zone qui est en face de l'élément (4) de détection du champ magnétique ou présente une aimantation qui génère un champ magnétique orienté.

2. Montage selon la revendication 1, caractérisé en ce que le module est enfichable dans un trou (5) d'un boîtier (6).

3. Montage selon la revendication 1 ou 2, caractérisé en ce que le composant rotatif est une cloche d'embrayage (7) comportant une denture extérieure et disposée à l'intérieur d'un élément cylindrique creux (8) formant la cloison rotative.

4. Montage selon la revendication 3, caractérisé en ce que l'élément cylindrique creux (8) est pratiquement plan dans la direction de la circonférence au moins dans une zone qui est en face du dispositif (1) de détection de la vitesse de rotation.

5. Montage selon au moins l'une des revendications 3 ou 4, caractérisé en ce que la cloche d'embrayage (7) comportant une denture extérieure et l'élément cylindrique creux (8) sont des organes de passage de vitesse d'une boîte à vitesses automatique de véhicule automobile qui est reliée à un convertisseur de couple hydraulique.

6. Montage selon la revendication 5, caractérisé en ce qu'une roue de turbine du convertisseur de couple hydraulique qui est reliée à la boîte à vitesses automatique de véhicule est reliée à la cloche d'embrayage (7) comportant une denture extérieure.

7. Montage selon au moins l'une des revendications 1 à 6, caractérisé en ce que l'élément (4) de détection du champ magnétique est un capteur fonctionnant selon le principe de la magnétorésistance.

8. Montage selon la revendication 7, caractérisé en ce que le capteur est capable de générer un signal indiquant l'immobilisation du composant qui est en soi rotatif.
